# EUROPEAN PATENT APPLICATION

(11) **EP 4 679 050 A1**
(43) Date of publication of application: **14.01.2026**
(21) Application number: 24187514.5
(22) Date of filing: 09.07.2024
(51) Int. Cl.: G01M 11/00

(54) **METHOD FOR DETECTING AN EVENT BASED ON DATA ACQUIRED BY A MEASUREMENT DEVICE**

(71) Applicant: Adtran Networks SE, 98617 Meiningen (DE)
(72) Inventor: Müller, Jasper, 81377 München (DE); Patri, Sai Kireet, 82110 Germering (DE)
(74) Representative: Eder Schieschke & Partner mbB

(57) **Abstract**

The present invention relates to a method for detecting an event based on data acquired by a measurement device, wherein the method (1) comprises the steps of:
- Acquiring data by a measurement device (2);
- Extracting features from the acquired data utilizing a feature extraction model (3);
- Detecting an event based on the extracted features utilizing a detection model (4); and
- Providing information about the detected event (5).

## Description

The present invention relates to a method for detecting an event based on data acquired by a measurement device which is based on separate sub-models which are implemented and trained separately.

Here an event is a notable happening in acquired data, in particular time-based data, for example changes in signal level or triggers. These events can be indicative of an abnormal condition, for example an optical fiber break or a leak in a pipe.

It is known to use complex machine learning algorithms to detect such events based on data acquired by a measurement device. Therein, a machine learning algorithm is a set of rules or processes used by an artificial intelligence system to solve tasks, such as discovering data insights, or predicting output values based on input values.

Such a machine learning algorithm is usually trained based on labelled training data, for example training data provided with ground truth information. There are, however, situations, in which usually only a limited amount of training data is available, for example if such a machine learning algorithm should be used for analyzing optical time domain reflectometry (OTDR) measurements. Automated machine learning assisted analysis of OTDR measurements are a crucial requirement for OTDR products, as it usually requires experienced experts to evaluate them.

US 11,573,152 B2 discloses a method, wherein a device receives optical time domain reflectometer (OTDR) trace samples, each sample labeled with an associated fiber optic cable condition. The device alters the received OTDR trace samples to generate a set of synthetic OTDR trace samples. Each synthetic sample is labeled with the label of the received sample that was altered to generate the synthetic sample. The device trains a machine learning-based classifier using a training dataset that comprises the synthetic OTDR trace samples. The device uses the trained classifier to identify a condition along a particular fiber optic cable based on OTDR trace data obtained from that cable.

There are for example data augmentation techniques known to generate additional training data based on known training data, which can however be prone to errors and could finally eventually lead to event misclassification.

Therefore, there is a need for an improved method for detecting an event based on data acquired by a measurement device.

This object is solved by a method for detecting events in data acquired by a measurement device according to claim 1.

This object is further solved by a system for detecting events in data acquired by a measurement device according to claim 8.

According to one embodiment of the invention, this object is solved by a method for detecting an event based on data acquired by a measurement device, wherein the method comprises the steps of acquiring data by a measurement device, extracting features from the acquired data utilizing a feature extraction model, detecting an event based on the extracted features utilizing a detection model, and providing information about the detected event.

Here, a measurement device is a sensor or a device that is configured to acquire, respectively sense or measure data, in particular time-based data, for example optical signals that are reflected at an interface, respectively a boundary layer.

Further, information about the detected event means information, respectively data characterizing, respectively describing the detected event, respectively the corresponding measurements.

That two different models, in particular two models that are implemented and trained separately are used, a feature extraction model and a detection model, has the advantage that lesser training data, respectively only a limited amount of training data is necessary to train the two models, wherein an automated event detection that is applicable to an extensive range of use cases can be provided. Therein, also the risk of overfitting, respectively a model that cannot make accurate predictions for other data than the training data, can be significantly decreased, while providing a more scalable and flexible solution that can be adapted to different measurement conditions and use cases. That less training data is required to train the two models further has the advantage that fewer computing resources, for example storage space, are required to train the models.

Therefore, an improved method for detecting an event based on data acquired by a measurement device is provided.

In one embodiment, the method further comprises the steps of receiving user feedback and optimizing the feature extraction model and/or the detection model based on the user feedback.

Here, that the feature extraction model and/or the detection model are optimized based on the user feedback means that the models are re-trained and/or that parameters of the models are optimized based on the user feedback, wherein the user feedback can for example relate to ground truth data.

Thereby, the models can be improved over time through a continuous feedback loop, without having to comprehensively train the models at the beginning.

The feature extraction model and the detection model can respectively be an analytical model, or a machine learning algorithm, or a combination thereof.

Here, an analytical model is a mathematical model that has a closed form solution.

Thus, the method can be based on a mix of pre-trained analytical or statistical models and small task-specific machine learning models, whereby the required training data can be further minimized.

In one embodiment, the measurement device is an optical time domain reflectometry device, in particular an optical time domain reflectometry device for Coherent Correlation optical time domain reflectometry (CC-OTDR). Automated machine learning assisted analysis of OTDR measurements are a crucial requirement for OTDR products, as it usually requires experienced experts to evaluate them.

However, that the measurement device is an optical time domain reflectometry device should merely be understood as an example, and the method can be used in different, applicable use cases, too, for example vibration events, for example vibration events due to excavators or trains close to a deployed fiber, or strain events, such as temperature changes, trees fallen on aerial cables, or water pipe leak detection.

According to still another embodiment of the invention, a method for identifying an event based on data acquired by a measurement device is provided, wherein the method comprises the steps of acquiring data by a measurement device, detecting an event based on the acquired data by using a method for detecting an event based on data acquired by a measuring device as described above, identifying the event based on information about the detected event utilizing an identification model, and providing information about the identified event.

Here, information about the identified event means information, respectively data characterizing, respectively describing the identified event, for example an event description and/or instructions to initiate corresponding safety mechanisms.

Thus, a method for identifying an event based on data acquired by a measurement device is provided that is based on three different models. That three different models, in particular three models that are implemented and trained separately are used, a feature extraction model, a detection model and an identification model, has the advantage that lesser training data, respectively only a limited amount of training data is necessary to train the three models, wherein an automated event identification that is applicable to an extensive range of use cases can be provided. Therein, also the risk of overfitting, respectively a model that cannot make accurate predictions for other data than the training data, can be significantly decreased, while providing a more scalable and flexible solution that can be adapted to different measurement conditions and use cases. That less training data is required to train the three models further has the advantage that fewer computing resources, for example storage space, are required to train the models.

Therein, the method can again further comprise the steps of receiving user feedback; and optimizing the identification model based on the user feedback.

Here, that the identification model is optimized based on the user feedback means that the model is re-trained and/or that parameters of the model are optimized based on the user feedback, wherein the user feedback can for example relate to ground truth data.

Thereby, the model can be improved over time through a continuous feedback loop, without having to comprehensively train the models at the beginning.

The identification model can again be an analytical model, or a machine learning algorithm, or a combination thereof. Thus, the method can be based on a mix of analytical or pretrained statistical models and small task-specific machine learning models, whereby the required training data can be further minimized. In particular, while machine learning models are trained, regarding the statistical and analytical models parameters can be optimized. In order to further reduce the training data, pre-trained machine learning feature extractors, or statistical aggregation methods, such as moving average, can be used for feature extraction without the need of training data.

According to still another embodiment of the invention, a system for detecting an event based on data acquired by a measurement device is provided, wherein the system comprises a measurement device, wherein the measurement device is configured to acquire data, an extraction device, wherein the extraction device is configured to extract features from the acquired data utilizing a feature extraction model, a detection device,
wherein the detection device is configured to detect an event based on the extracted features utilizing a detection model, and a providing device, wherein the providing device is configured to provide information about the detected event.

Therefore, an improved system for detecting an event based on data acquired by a measurement device is provided. That two different models, in particular two models that are implemented and trained separately are used, a feature extraction model and a detection model, has the advantage that lesser training data, respectively only a limited amount of training data is necessary to train the two models, wherein an automated event detection that is applicable to an extensive range of use cases can be provided. Therein, also the risk of overfitting, respectively a model that cannot make accurate predictions for other data than the training data, can be significantly decreased, while providing a more scalable and flexible solution that can be adapted to different measurement conditions and use cases. That less training data is required to train the two models further has the advantage that fewer computing resources, for example storage space, are required to train the models.

In one embodiment, the system further comprises a receiving device, wherein the receiving device is configured to receive user feedback, and at least one optimizing device, wherein the at least one optimizing device is configured to optimize the feature extraction model and/or the detection model based on the user feedback. Thereby, the models can be improved over time through a continuous feedback loop, without having to comprehensively train the models at the beginning.

The feature extraction model and the detection model can respectively be an analytical model, or a machine learning algorithm, or a combination thereof. Thus, the system can be based on a mix of pre-trained analytical or statistical models and small task-specific machine learning models, whereby the required training data can be further minimized.

In one embodiment, the measurement device is an optical time domain reflectometry device, in particular an optical time domain reflectometry device for CC-OTDR. Automated machine learning assisted analysis of OTDR measurements are a crucial requirement for OTDR products, as it usually requires experienced experts to evaluate them.

However, that the measurement device is an optical time domain reflectometry device should merely be understood as an example, and the method can be used in different, applicable use cases, too, for example vibration events, for example vibration events due to excavators or trains close to a deployed fiber, or strain events, such as temperature changes, trees fallen on aerial cables, or water pipe leak detection.

According to still another embodiment of the invention, a system for identifying an event based on data acquired by a measurement device is provided, wherein the system comprises a measurement device, wherein the measurement device is configured to acquire data, a system for detecting an event based on data acquired by a measurement device as described above, wherein the system for detecting an event based on data acquired by a measurement device is configured to detect an event based on the data acquired by the measurement device, an identification device, wherein the identification device is configured to identify the event based on information about the detected event utilizing an identification model, and a providing unit, wherein the providing unit is configured to provide information about the identified event.

Thus, a system for identifying an event based on data acquired by a measurement device is provided that is based on three different models. That three different models, in particular three models that are implemented and trained separately are used, a feature extraction model, a detection model and an identification model, has the advantage that lesser training data, respectively only a limited amount of training data is necessary to train the three models, wherein an automated event identification that is applicable to an extensive range of use cases can be provided. Therein, also the risk of overfitting, respectively a model that cannot make accurate predictions for other data than the training data, can be significantly decreased, while providing a more scalable and flexible solution that can be adapted to different measurement conditions and use cases. That less training data is required to train the three models further has the advantage that fewer computing resources, for example storage space, are required to train the models.

In one embodiment, the system further comprises a receiving device, wherein the receiving device is configured to receive user feedback, and an optimizing device, wherein the optimizing device is configured to optimize the identification model based on the user feedback. Thereby, the model can be improved over time through a continuous feedback loop, without having to comprehensively train the models at the beginning.

The identification model can again be an analytical model, or a machine learning algorithm, or a combination thereof. Thus, the method can be based on a mix of pre-trained analytical or statistical models and small task-specific machine learning models, whereby the required training data can be further minimized.

The present invention will now be described in further detail with reference to the attached drawings.
- Fig. 1: illustrates a method for detecting an event based on data acquired by a measuring device, according to embodiments of the invention;
- Fig.2: illustrates a system for identifying an event based on data acquired by a measuring device, according to embodiments of the invention.

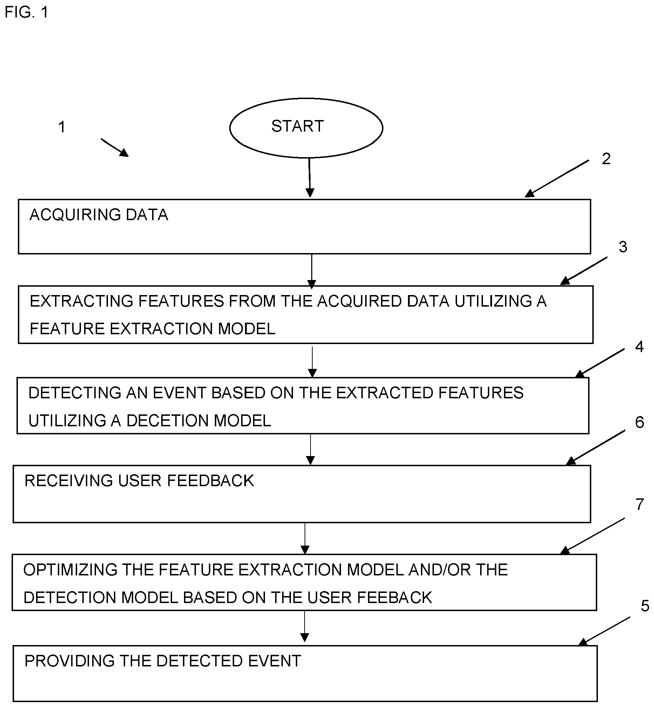

Fig. 1 illustrates a method for detecting an event based on data acquired by a measuring device 1, according to embodiments of the invention.

Accurately analyzing OTDR measurements requires expertise, time and knowledge. Therein, automated measurement analysis adds value and increases the scope of application of OTDR devices, as the analysis currently requires experienced experts to evaluate the data, respectively the measurements. In many cases, the difference or similarity between events can already not be distinguished by humans, even though differences in the data might exist.

A corresponding machine learning algorithm to analyze OTDR measurements is usually trained based on labelled training data, for example training data provided with ground truth information. There are, however, situations, in which usually only a limited amount of training data is available, for example if such a machine learning algorithm should be used for analyzing OTDR measurements.

There are for example data augmentation techniques known to generate additional training data based on known training data, which can however be prone to errors and could finally eventually lead to event misclassification, as generating a labelled dataset is a manual and repetitive task.

The method 1 shown in Fig. 1 comprises the steps of acquiring data by a measurement device 2, extracting features from the acquired data utilizing a feature extraction model 3, detecting an event based on the extracted features utilizing a detection model 4, and providing information about the detected event 5.

That two different models, in particular two models that are implemented and trained separately are used, a feature extraction model and a detection model, has the advantage that lesser training data, respectively only a limited amount of training data is necessary to train the two models, wherein an automated event detection that is applicable to an extensive range of use cases can be provided. Therein, also the risk of overfitting, respectively a model that cannot make accurate predictions for other data than the training data, can be significantly decreased, while providing a more scalable and flexible solution that can be adapted to different measurement conditions and use cases. That less training data is required to train the two models further has the advantage that fewer computing resources, for example storage space, are required to train the models.

Therefore, an improved method for detecting an event based on data acquired by a measurement device 1 is provided.

The information about the detected information can for example a representation on a graphical user interface, or an input to an additional identification model.

According to the embodiments of Fig. 1, the method 1 further comprises the steps of receiving user feedback 5 and optimizing the feature extraction model and/or the detection model based on the user feedback 6.

The user feedback can for example be received through an input device, respectively a user interface, wherein the user feedback can be utilized to train, respectively fine-tune the models and deploy improved models over time.

According to the embodiments of Fig. 1, the feature extraction model and the detection model respectively are an analytical model, or a machine learning algorithm, or a combination thereof.

In particular, the feature extraction model can for example be a rolling window statistic with tuneable window size, a time-series decomposition, a convolutional neural network, a recurrent neural network, an autoencoder or a GAN model.

Further, the detection model can for example be a peak search, a machine learning classification model, or a shapelet-based estimator.

According to the embodiments of Fig. 1, the measurement device is further an OTDR measurement device.

Therein, the model split makes the solution scalable to account for larger input dimensions, like CC-OTDR measurements.

Further, the information about the event can also form the input for an event classifier, respectively an identification model, wherein the identification model can for example be a shapelet-based estimator or a machine learning classification model.

Therein, the separation of feature extraction event detection and event identification models, which are optimized based on user, respectively human feedback, provides a flexible and scalable automated analysis system for OTDR measurements. Further, parameter-tuned deterministic methods can for example be used for the event detection, while small task-specific classifiers be improved during in-service monitoring and specialised to the desired use cases.

Therein, for example a moving average estimator can be used to extract features from the acquired data for detection, wherein the detection can then be based on a standard peak detection algorithm on a moving average, and wherein the identification can be based on a decision tree for classification based on maximum, respectively moving average trace in a fixed size are around the detected peak and/or average standard deviation in this are and/or the distance from the detected peak to the OTDR device.

Based on the identified event, corresponding safety mechanisms can then for example be automatically initiated. The identified event can further for example be a fiber break, wherein corresponding safety mechanisms can for example be automatically initiated in case a fiber break is identified.

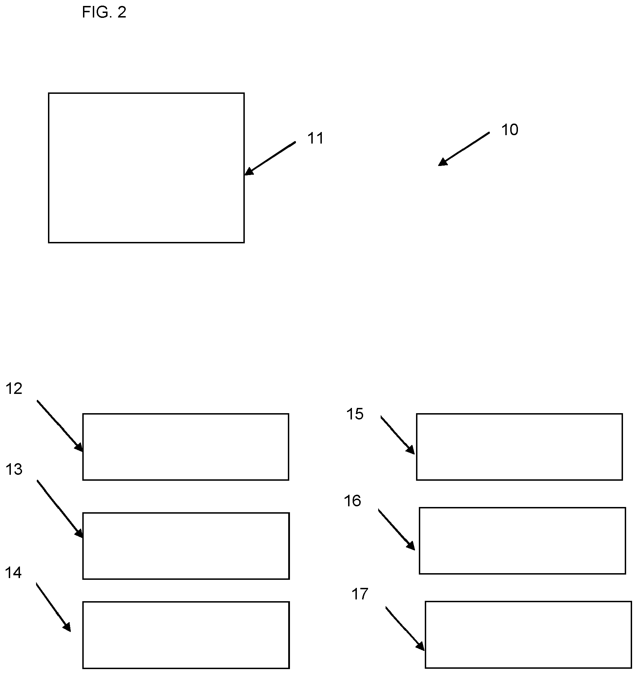

Fig. 2 illustrates a system for identifying an event based on data acquired by a measuring device 10, according to embodiments of the invention.

As shown in Fig. 2, the system 10 comprises a measurement device 11, wherein the measurement device 11 is configured to acquire data, an extraction device 12, wherein the extraction device 12 is configured to extract features from the acquired data utilizing a feature extraction model, a detection device 13, wherein the detection device 13 is configured to detect an event from the extracted features utilizing a detection model, an identification device 14, wherein the identification device 14 is configured to identify the detected event based on information about the detected event, and a providing device 15, wherein the providing device 15 is configured to provide information about the detected event.

Therein, the extraction device, the detection device and the providing device can for example be realized based on code that is stored in a memory and executable by a processor. The provider can for example be a transmitter that is configured transmit the information about the identified event to a further device for further processing.

As shown in Fig. 2, the system, 10 further comprises a receiving device 16, wherein the receiving device 16 is configured to receive user feedback, and an optimizing device 17, wherein the optimizing device 17 is configured to respectively optimize the feature extraction model, the detection model and the identification model based on the user feedback.

Therein, the receiving device can for example be a user interface, respectively an input device. The optimizing device can again be realized based on code that is stored in a memory and executable by a processor.

According to the embodiments of Fig. 2, the feature extraction model, the detection model and the identification model again respectively are an analytical model, or a machine learning algorithm, or a combination thereof.

Further, the measurement device is again an OTDR device.

Furthermore, the shown system 10 is configured to execute a method as described above.

### Reference signs

- 1: method
- 2: step
- 3: step
- 4: step
- 5: step
- 6: step
- 7: step
- 10: system
- 11: measurement device
- 12: extraction device
- 13: detection device
- 14: identification device
- 15: providing device
- 16: receiving device
- 17: optimizing device

## Claims

1. Method for detecting an event based on data acquired by a measurement device, wherein the method (1) comprises the steps of:
- Acquiring data by a measurement device (2);
- Extracting features from the acquired data utilizing a feature extraction model (3);
- Detecting an event based on the extracted features utilizing a detection model (4); and
- Providing information about the detected event (5).

2. Method according to claim 1, wherein the method (1) further comprises the steps of:
- Receiving user feedback (6); and
- Optimizing the feature extraction model and/or the detection model based on the user feedback (7).

3. Method according to claim 1 or 2, wherein the feature extraction model and the detection model respectively are an analytical model, or a machine learning algorithm, or a combination thereof.

4. Method according to one of claims 1 to 3, wherein the measurement device is an optical time domain reflectometry device.

5. Method for identifying an event based on data acquired by a measurement device, wherein the method comprises the steps of:
- Acquiring data by a measurement device;
- Detecting an event based on the acquired data by using a method for detecting an event based on data acquired by a measurement device according to one of claims 1 to 4;
- Identifying the event based on information about the detected event utilizing an identification model; and
- Providing information about the identified event.

6. Method according to claim 5, wherein the method further comprises the steps of:
- Receiving user feedback; and
- Optimizing the identification model based on the user feedback.

7. Method according to claim 5 or 6, wherein the identification model is an analytical model, or a machine learning algorithm, or a combination thereof.

8. System for detecting an event based on data acquired by a measurement device, wherein the system comprises a measurement device (11), wherein the measurement device (11) is configured to acquire data, an extraction device (12), wherein the extraction device (12) is configured to extract features from the acquired data utilizing a feature extraction model, a detection device (13), wherein the detection device (13) is configured to detect an event based on the extracted features utilizing a detection model, and a providing device (15), wherein the providing device (15) is configured to provide information about the detected event.

9. System according to claim 8, wherein the system further comprises a receiving device (16), wherein the receiving device (16) is configured to receive user feedback, and at least one optimizing device (17), wherein the at least one optimizing device is configured to optimize the feature extraction model and/or the detection model based on the user feedback.

10. System according to claim 8 or 9, wherein the feature extraction model and the detection model respectively are an analytical model, or a machine learning algorithm, or a combination thereof.

11. System according to one of claims 8 to 10, wherein the measurement device is an optical time domain reflectometry device.

12. System for identifying an event based on data acquired by a measurement device, wherein the system (10) comprises a measurement device (11), wherein the measurement (11) device is configured to acquire data, a system for detecting an event based on data acquired by a measurement device according to one of claims 8 to 11, wherein the system for detecting an event based on data acquired by a measurement device is configured to detect an event based on the data acquired by the measurement device (11), an identification device (14), wherein the identification device is configured to identify the event based on information about the detected event utilizing an identification model, and a providing device (15), wherein the providing device (15) is configured to provide information about the identified event.

13. System according to claim 12 wherein the system (10) further comprises a receiving device (16), wherein the receiving device (16) is configured to receive user feedback, and an optimizing device (17), wherein the optimizing device (17) is configured to optimize the identification model based on the user feedback.

14. System according to claim 12 or 13, wherein the identification model is an analytical model, or a machine learning algorithm, or a combination thereof.
